# EUROPEAN PATENT SPECIFICATION

(11) **EP 3 722 207 B1**
(45) Date of publication and mention of the grant of the patent: **06.10.2021**
(21) Application number: 20152388.3
(22) Date of filing: 17.01.2020
(51) Int. Cl.: B64C 27/82, B64C 27/12

(54) **ENGAGEMENT AND DISENGAGEMENT OF A TAIL ROTOR**
IN- UND AUSSERBETRIEBNAHME EINES HECKROTORS
ENGAGEMENT ET DÉSENGAGEMENT D'UN ROTOR DE QUEUE

(30) Priority: 11.04.2019 US 201916382052
(43) Date of publication of application: 14.10.2020
(73) Proprietor: Bell Helicopter Textron Inc., Fort Worth, TX 76101 (US)
(72) Inventor: WILCOX, Matthew Michael, Fort Worth, TX 76137 (US); ACEE, Aaron Alexander, Flower Mound, TX 75022 (US)
(74) Representative: Barker Brettell LLP

(56) References cited:
- CN-A- 108 516 083
- US-A1- 2013 134 264
- US-A1- 2013 264 412
- US-A1- 2017 174 355

## Description

### TECHNICAL FIELD

This disclosure relates in general to the field of rotorcraft, and more particularly, to disengagement of an anti-torque rotor.

### BACKGROUND

This section provides background information to facilitate a better understanding of the various aspects of the disclosure. It should be understood that the statements in this section of this document are to be read in this light, and not as admissions of prior art.

A rotorcraft may include one or more rotor systems. One example of a rotorcraft rotor system is a main rotor system. A main rotor system may generate aerodynamic lift to support the weight of the rotorcraft in flight and thrust to counteract aerodynamic drag and move the rotorcraft in forward flight. Another example of a rotorcraft rotor system is a tail rotor system. A tail rotor system may generate thrust in the same direction as the main rotor system's rotation to counter the torque effect created by the main rotor system.

US 2013/0134264 A1 discloses a rotor aircraft with an engine, propellor, wings and a rotor. An electric motor is coupled to the rotor drive shaft for applying torque to the rotor drive shaft. The electric motor is sized to supply all of the torque to pre-rotate the rotor to a selected speed prior to liftoff of the aircraft. The wings are capable of providing substantially all of the lift required during forward flight at a cruise speed.

US 2013/0264412 A1 discloses a rotary wing aircraft provided with a main lift rotor, a tail rotor, and a power plant driving a main gearbox that co-operates with said main rotor, said tail rotor being provided with a plurality of blades of variable pitch and with a pitch modification device, and said aircraft having control means for controlling said pitch modification device. The aircraft includes an electric motor for rotating said tail rotor and regulator means connected to the control means and also to the electric motor and to the pitch modification device.

US 2017/0174355 A1 discloses a helicopter includes a tail rotor, a primary drive system operatively connected to the tail rotor, and a secondary drive system operative connected to the tail rotor. The secondary drive system is configured to supplement torque provided to the tail rotor by the primary drive system.

### SUMMARY

In accordance with the invention there is provided a rotorcraft and a method of operating a rotorcraft, as defined by the appended claims.

### BRIEF DESCRIPTION OF THE DRAWINGS

The disclosure is best understood from the following detailed description when read with the accompanying figures. It is emphasized that, in accordance with standard practice in the industry, various features are not drawn to scale. In fact, the dimensions of various features may be arbitrarily increased or reduced for clarity of discussion.
Figure 1 illustrates an exemplary rotorcraft implementing a system to engage the tail rotor to the main rotor propulsion system and to disengage the tail rotor from the main rotor propulsion system.
Figure 2 illustrates an exemplary rotor system according to one or more aspects of the disclosure.
Figure 3 illustrates an exemplary rotor engagement system.
Figure 4 illustrates another exemplary rotor engagement system.
Figure 5 illustrates another exemplary rotor engagement system.
Figure 6 illustrates an exemplary method according to one or more aspects of the disclosure.

### DETAILED DESCRIPTION

It is to be understood that the following disclosure provides many different embodiments, or examples, for implementing different features of various illustrative embodiments. Specific examples of components and arrangements are described below to simplify the disclosure. These are, of course, merely examples and are not intended to be limiting. For example, a figure may illustrate an exemplary embodiment with multiple features or combinations of features that are not required in one or more other embodiments and thus a figure may disclose one or more embodiments that have fewer features or a different combination of features than the illustrated embodiment. Embodiments may include some but not all the features illustrated in a figure and some embodiments may combine features illustrated in one figure with features illustrated in another figure. Therefore, combinations of features disclosed in the following detailed description may not be necessary to practice the teachings in the broadest sense and are instead merely to describe particularly representative examples. In addition, the disclosure may repeat reference numerals and/or letters in the various examples. This repetition is for the purpose of simplicity and clarity and does not itself dictate a relationship between the various embodiments and/or configurations discussed.

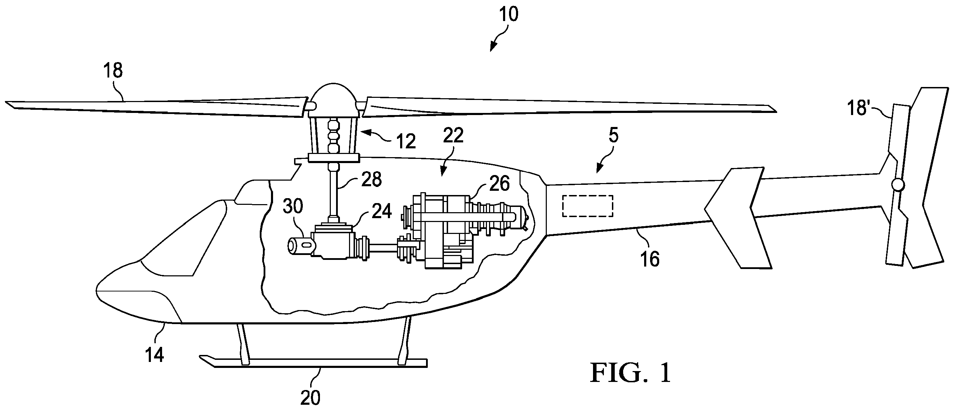

Figure 1 illustrates an exemplary rotorcraft 10 incorporating a rotor engagement system 5 according to an embodiment of the disclosure. Rotorcraft 10 includes a rotor system 12, a fuselage 14, and an empennage 16. Rotor system 12 may include rotor 18 (e.g., blades). Rotor system 12 may include a control system for selectively controlling the pitch of each rotor blades in order to selectively control direction, thrust, and lift of rotorcraft 10. Fuselage 14 represents the body of rotorcraft 10 and may be coupled to rotor system 12 such that rotor system 12 and rotor 18 may move fuselage 14 through the air. Landing gear 20 supports rotorcraft 10 when rotorcraft 10 is landing and/or when rotorcraft 10 is at rest on the ground. Empennage 16 represents the tail section of the aircraft and features components of a rotor system 12 and secondary or anti-torque rotor 18'. Rotor 18' may provide thrust in the same direction as the rotation of rotor 18 so as to counter the torque effect created by rotor system 12 and rotor 18. Teachings of certain embodiments relating to rotor systems described herein may apply to rotor system 12 and/or other rotor systems, such as other helicopter rotor and tiltrotor systems. It should also be appreciated that teachings from rotorcraft 10 may apply to aircraft other than rotorcraft, such as airplanes and unmanned aircraft, to name a few examples. Teachings of certain embodiments recognize that secondary rotor 18' is an anti-torque rotor; other examples not covered by the claims, include, but are not limited to, tail propellers, ducted tail rotors, and ducted fans mounted inside and/or outside the aircraft.

Rotorcraft 10 includes a propulsion system 22 to drive rotor system 12. Propulsion system 22 includes a prime mover 26 mechanically coupled to main rotor 18. Prime mover 26 may be an electric motor or an engine. In the illustrated exemplary rotorcraft 10, prime mover 26 is an engine and propulsion system 22 includes a transmission 24 mechanically coupled to engine 26. Main rotor 18 is mechanically connected to transmission 24 through mast 28. A secondary rotor, tail rotor blade 18' in the illustrated exemplary rotorcraft, is mechanically connected to prime mover 26 through engagement system 5. Device 30 may be a generator or hydraulic pump connected to propulsion system 22 to provide electricity or hydraulic pressure to various components.

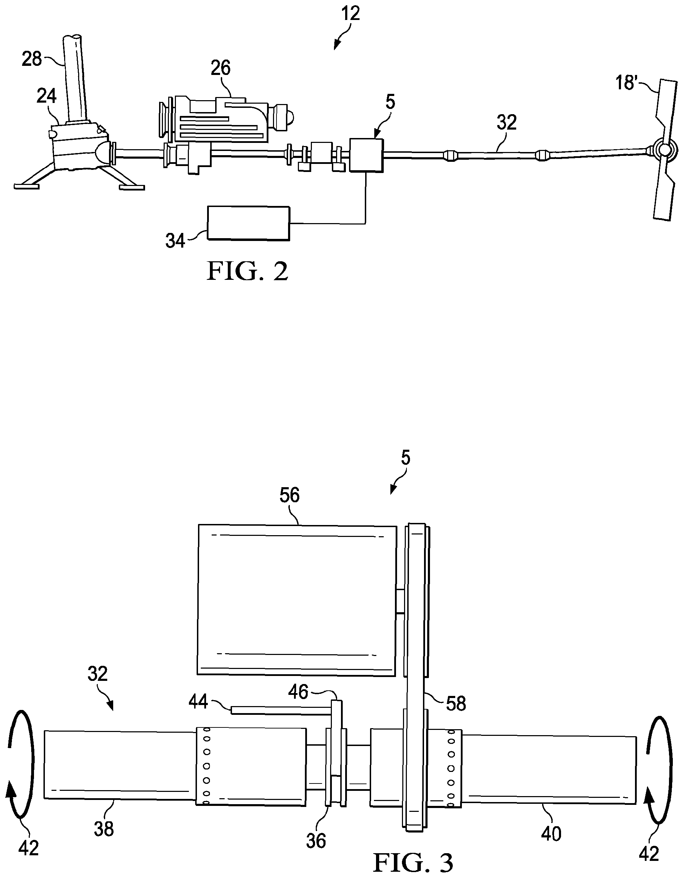

Figure 2 illustrates an exemplary rotor system 12. Engine 26 is mechanically connected to tail rotor 18' through a drive shaft 32 coupled with engagement system 5. Engagement system 5 may include an alternative power source 34. Alternative power source 34 may include device 30, driven by engine 26, or a separate power source such as a battery, capacitor, or flywheel.

Tail rotor 18' may pose certain safety issues. For example, when rotorcraft 10 is operating but still on the ground, tail rotor 18' may spin within feet of the ground. In this example, tail rotor 18' may pose a safety risk to ground personnel walking near rotorcraft 10. Although ideally, ground personnel should not walk near rotorcraft 10 while rotorcraft 10 is operating on the ground, sometimes such circumstances are practically unavoidable. For example, it may be necessary for medical personnel to approach rotorcraft 10 while rotorcraft 10 is still operating in order to unload an injured person from rotorcraft 10. Accordingly, teachings of certain embodiments recognize the capability to disengage the tail rotor such that rotor system 12 no longer spins tail rotor 18'.

Although disengaging tail rotor 18' may resolve some safety issues, however, additional issues may arise if tail rotor 18' is disengaged at the wrong time. In particular, rotorcraft 10 may not fly properly if tail rotor 18' is disengaged when rotorcraft 10 is off the ground. Such may be the case, for example, if a pilot attempts to takeoff from the ground while tail rotor 18' is still disengaged.

Accordingly, teachings of certain embodiments recognize the capability to prevent disengagement of the tail rotor system as well as provide for reengagement of the tail rotor system based on operating conditions of the aircraft. In some embodiments, these operating conditions may be indicative of whether the aircraft is on the ground or in the air. Teachings of certain embodiments recognize the capability to prevent disengagement of the tail rotor system if the operating conditions do not satisfy predetermined criteria that indicate that the aircraft is on the ground at the time of disengagement.

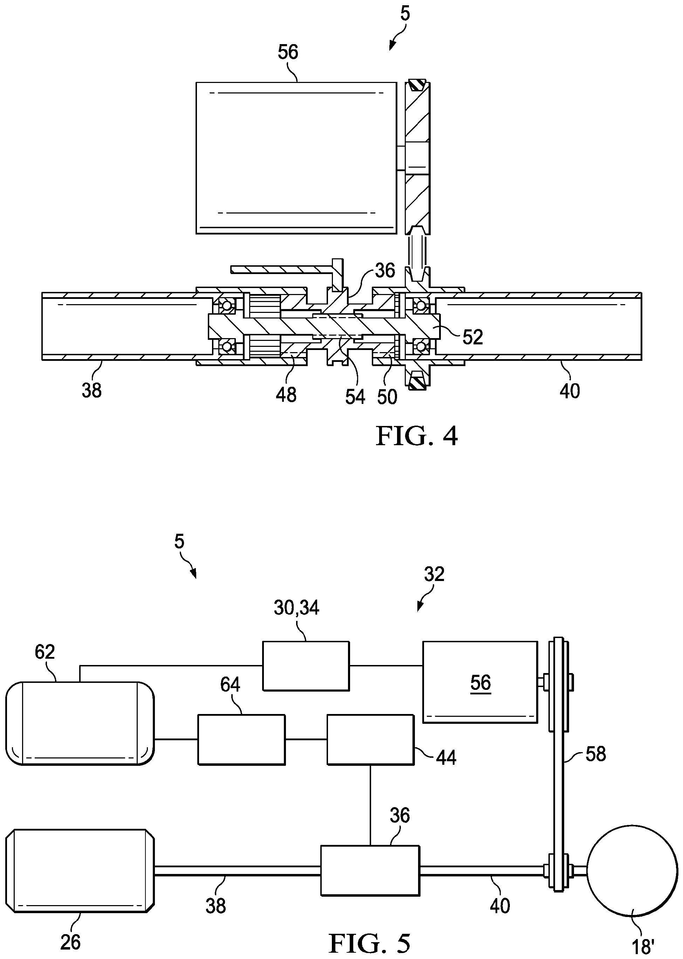

Figures 3 and 4 illustrate an exemplary embodiment of a rotor engagement system 5. Rotor engagement system 5 includes a sliding coupling 36 within drive shaft 32 separating drive shaft 32 into an input shaft 38 and a rotor shaft 40. In an embodiment, sliding coupling 36 is a spline or gear-tooth coupling. When sliding coupling 36 is in an engaged position, torque 42 is transferred from input shaft 38 through sliding coupling 36 to rotor shaft 40. When sliding coupling 36 is in the disengaged position, torque 42 is not transferred from input shaft 38 to rotor shaft 40. In Figures 3 and 4, sliding coupling 36 is actuated via a push/pull tube 44 through a shifting fork 46. Push/pull tube 44 may be operated manually from the fuselage or via an actuator. With reference to Figure 4, coupling 36 includes an input spline 48, output or rotor spline 50, alignment shaft 52, and alignment shaft spline 54.

Rotor engagement system 5 includes a motor 56 rotationally connected to the output or rotor shaft 40. Motor 56 is an electric motor. Motor 56 is used, when coupling 36 is disengaged, to bring the rotational speed of rotor shaft 40 up to the speed of input shaft 38 to allow sliding coupling 36 to be actuated to the engaged positioned. Because the rotational velocities of the input shaft 38 and rotor shaft 40 are not identical, the initial engagement of sliding coupling 36 may use a friction system that will allow some relative movement prior to full engagement. This may be accomplished via a synchronizer.

When the tail rotor blades are at flat-pitch, a traditional tail rotor generates relatively low drag at idle speed and is lower in inertia than the main rotor drive system. This allows a relatively small and lightweight motor 56 to be utilized without the need for any additional wear items like friction clutches. For example, motor 56 may be a 10 horsepower or less motor. In accordance with an embodiment, motor 56 is a 3 horsepower motor.

The motor 56 is coupled to rotor shaft 40 with a belt 58. Motor 56 is connected to rotor shaft 40 through a belt drive due to the lower power of the system and the fact that motor 56 is only operated on the ground. Motor 56 includes a centrifugal clutch to disengage from belt 58 when a threshold rotational speed is exceeded, for example, flight speed or a speed between idle and flight speed. When coupling 36 is engaged, power is cut to motor 56 the rotational speed of the motor driven shaft slows disengaging the centrifugal clutch.

Figure 5 illustrates another exemplary embodiment of a rotor engagement system 5. Tail rotor 18' is mechanically coupled to engine 26 through a drive shaft 32. Drive shaft 32 includes a coupling 36 separating drive shaft 32 into an input shaft 38 and an output or rotor shaft 40. Coupling 36 is operable via actuator device 44 between an engaged positioned rotationally connecting input shaft 38 to rotor shaft 40 and a disengaged position rotationally disengaging input shaft 38 from rotor shaft 40. A controller 62 is operationally connected to actuator device 44. Controller 62 may be or include a manual controller, for example, a stick, pedal, switch. Controller 62 may be or include a computer processor. A lock-out system or device 64 may be operationally connected to actuator device 44 to prevent accidental disengagement of rotor 18' for example during flight. Motor 56 is operationally connected to rotor 18' and rotor shaft 40 for example by belt 58. Motor 56 is an electric motor. Motor 56 may be connected to a main rotor propulsion system driven power supply device 30, e.g., an electric generator or a hydraulic pump. Motor 56 may be operationally connected to a battery 34 to supply electric power to motor 56.

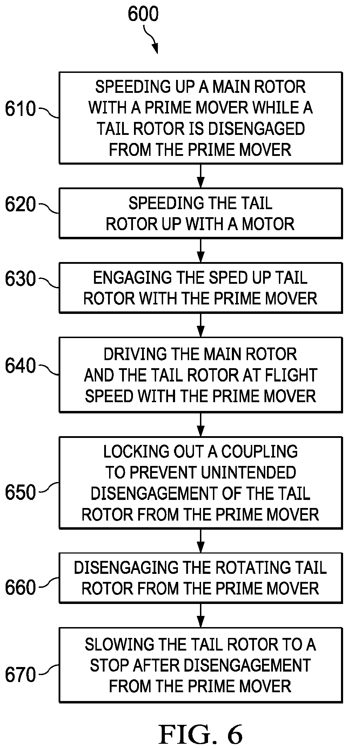

An exemplary method 600 of operating a rotorcraft 10 is now described with reference to Figures 1-6. At block 610, during rotorcraft 10 startup, coupling 36 is disengaged allowing engine 26 and main rotor blades 18 to spool up while tail rotor 18' is disengaged, allowing safety for ground personnel. At block 620, when rotorcraft 10 is ready to takeoff and ground personnel are clear of rotorcraft 10, motor 56 spools tail rotor 18' up to idle speed. At block 630, when motor 56 has spooled rotor shaft 40 up to idle speed and the speed of input shaft 38 and rotor shaft 40 are synchronous, coupling 36 is operated to the engaged position rotationally connecting input shaft 38 to rotor shaft 40. At block 640, rotor 18 and tail rotor 18' spools up to flight speed, via engine 26, and rotorcraft 10 performs a mission. At block 650, operation of coupling 36 is locked-out to prevent accidental disengagement to tail rotor 18' from engine 26. The lock-out system 64 may be associated with the speed of tail rotor 18', for example when tail rotor 18' speed exceeds the idle speed the system may be locked out. In an embodiment, coupling 36 may have centrifugally activated pins or levers that lock the coupling when the speed of rotor shaft 40 exceeds a threshold level. In another embodiment, activator tube 44 is manually operated and lock-out system 64 may include a mechanical lock-out, e.g., pin or detent, located in the fuselage. In another embodiment, lock-out system 64 may include an electric solenoid. At block 660, coupling 36 is operated to the disengaged position thereby disengaging tail rotor 18' from main rotor 18 and engine 26. At block 670, rotation of tail rotor 18' slows to a stop after a period of time. Once tail rotor 18' is disengaged, aerodynamic torque and friction slows its rotation. In some embodiments, motor 56 may be used as a generator, e.g. regenerative braking, with the benefit of reducing the period of time required to stop rotation of tail rotor 18'. Additionally, in a regenerative braking embodiment, the slowing tail rotor 18' drives motor 56 as a generator to charge power source 34.

Conditional language used herein, such as, among others, "can," "might," "may," "e.g.," and the like, unless specifically stated otherwise, or otherwise understood within the context as used, is generally intended to convey that certain embodiments include, while other embodiments do not include, certain features, elements and/or states. Thus, such conditional language is not generally intended to imply that features, elements and/or states are in any way required for one or more embodiments or that one or more embodiments necessarily include such elements or features.

In the specification, reference may be made to the spatial relationships between various components and to the spatial orientation of various aspects of components as the devices are depicted in the attached drawings. However, as will be recognized by those skilled in the art after a complete reading of the present application, the devices, members, apparatuses, etc. described herein may be positioned in any desired orientation. Thus, the use of terms such as "inboard," "outboard," "above," "below," "upper," "lower," or other like terms to describe a spatial relationship between various components or to describe the spatial orientation of aspects of such components should be understood to describe a relative relationship between the components or a spatial orientation of aspects of such components, respectively, as the device described herein may be oriented in any desired direction. As used herein, the terms "connect," "connection," "connected," "in connection with," and "connecting" may be used to mean in direct connection with or in connection with via one or more elements. Similarly, the terms "couple," "coupling," and "coupled" may be used to mean directly coupled or coupled via one or more elements.

The foregoing outlines features of several embodiments so that those skilled in the art may better understand the aspects of the disclosure. Those skilled in the art should appreciate that they may readily use the disclosure as a basis for designing or modifying other processes and structures for carrying out the same purposes and/or achieving the same advantages of the embodiments introduced herein. The scope or the invention is determined only by the language of the claims that follow. The term "comprising" within the claims is intended to mean "including at least" such that the recited listing of elements in a claim are an open group. The terms "a," "an" and other singular terms are intended to include the plural forms thereof unless specifically excluded.

## Claims

1. A rotorcraft (10), comprising:
a propulsion system (22) including an engine (26) and a drive shaft (32) coupled to the engine (26), the drive shaft (32) including a sliding coupling (36) separating the drive shaft (32) into an input shaft (38) and an output shaft (40), the sliding coupling (36) operable between an engaged position rotationally coupling the input shaft (38) and the output shaft (40) and a disengaged position rotationally disengaging the output shaft (40) from the input shaft (38);
a main rotor (18) coupled to the engine (26);
an anti-torque rotor (18') attached to the output shaft (40); and
an electric motor (56) coupled to the output shaft (40) by a belt (58), the belt connected to the electric motor (56) through a centrifugal clutch.

2. The rotorcraft of claim 1, wherein the electric motor (56) is coupled to a generator driven by the engine (26) or is coupled to a battery (34).

3. A method, comprising:
operating a rotorcraft (10) according to claim 1;
actuating the sliding coupling (36) to the disengaged position disengaging the anti-torque rotor (18') from the engine (26);
spooling up the main rotor (18) with the engine (26) while the anti-torque rotor (18') is disengaged from the engine (26);
driving, when the sliding coupling (36) is in the disengaged position, the output shaft (40) with an electric motor (56) to a speed synchronous with the input shaft (38) driven by the engine (26); and
actuating the sliding coupling (36) to the engaged position when the input shaft (38) speed and the output shaft (40) speed are synchronous.

4. The method of claim 3, further comprising driving the main rotor (18) and the anti-torque rotor (18') with the engine (26) at a flight speed.

5. The method of claim 4, further comprising disengaging the electric motor (56) from the output shaft (40) via the centrifugal clutch when the engine (26) is driving the main rotor (18) and the anti-torque rotor (18') at the flight speed.

6. The method of claim 3, further comprising driving the main rotor (18) and the anti-torque rotor (18') with the engine (26) while the sliding coupling (36) is in the engaged position;
actuating the sliding coupling (36) to the disengaged position while the engine (26) is driving the main rotor (18) and the input shaft (38) ; and
braking rotation of the anti-torque rotor (18') with the electric motor (56) coupled to the output shaft (40).

7. The method of claim 6, further comprising an electric power source (34) connected to the electric motor (56); and charging the electric power source (34) with the electric motor (56) while braking the anti-torque rotor (18').

## Patentansprüche

1. Drehflügler (10), umfassend:
ein Antriebssystem (22), das eine Maschine (26) und eine Antriebswelle (32), die mit der Maschine (26) gekoppelt ist, beinhaltet, wobei die Antriebswelle (32) ein Gleitkupplung (36) beinhaltet, die die Antriebswelle (32) in eine Eingangswelle (38) und eine Ausgangswelle (40) trennt, wobei die Gleitkupplung (36) zwischen einer eingekuppelten Position, die drehbar die Eingangswelle (38) und die Ausgangswelle (40) koppelt, und einer ausgekuppelten Position betrieben werden kann, die drehbar die Ausgangswelle (40) von der Eingangswelle (38) entkuppelt,
einen Hauptrotor (18), der mit der Maschine (26) gekoppelt ist;
einen Drehmomentausgleichsrotor (18'), der an die Ausgangswelle (40) befestigt ist; und
einen elektrischen Motor (56), der mit der Ausgangswelle (40) durch einen Gurt (58) gekoppelt ist, wobei der Gurt durch eine Fliehkraftkupplung mit dem elektrischen Motor (56) verbunden ist.

2. Drehflügler nach Anspruch 1, wobei der elektrische Motor (56) mit einem Generator gekoppelt ist, der von der Maschine (26) angetrieben wird, oder mit einer Batterie (34) gekoppelt ist.

3. Verfahren umfassend:
Betreiben eines Drehflüglers (10) nach Anspruch 1;
Bewegen der Gleitkupplung (36) in die ausgekuppelte Position durch Auskuppeln des Drehmomentausgleichsrotors (18') von der Maschine (26);
Aufspulen des Hauptrotors (18) mit der Maschine (26), während der Drehmomentausgleichsrotor (18') von der Maschine (26) ausgekoppelt wird;
Antreiben, wenn sich die Gleitkupplung (36) in der ausgekuppelten Position befindet, der Ausgangswelle (40) mit einem elektrischen Motor (56) auf eine Geschwindigkeit, die synchron mit der Eingangswelle (38) ist, die von der Maschine (26) angetrieben wird; und
Bewegen der Gleitkupplung (36) in die eingekuppelte Position, wenn die Geschwindigkeit der Eingangswelle (38) und die Geschwindigkeit der Ausgangswelle (40) synchron sind.

4. Verfahren nach Anspruch 3, weiter umfassend Antreiben des Hauptrotors (18) und des Drehmomentausgleichsrotors (18') mit der Maschine (26) auf eine Fluggeschwi ndigkeit.

5. Verfahren nach Anspruch 4, weiter umfassend Auskuppeln des elektrischen Motors (56) von der Ausgangswelle (40) über die Fliehkraftkupplung, wenn die Maschine (26) den Hauptrotor (18) und den Drehmomentausgleichsrotor (18') auf die erste Fluggeschwindigkeit antreibt.

6. Verfahren nach Anspruch 3, weiter umfassend Antreiben des Hauptrotors (18) und des Drehmomentausgleichsrotors (18') mit der Maschine (26), während sich die Gleitkupplung (36) in der ausgekuppelten Position befindet;
Bewegen der Gleitkupplung (36) in die ausgekuppelte Position, während die Maschine (26) den Hauptrotor (18) und die Eingangswelle (38) antreibt; und
Bremsen der Drehung des Drehmomentausgleichsrotors (18'), wobei der elektrische Motor (56) mit der Ausgangswelle (40) gekoppelt ist.

7. Verfahren nach Anspruch 6, weiter umfassend eine elektrische Stromquelle (34), die mit dem elektrischen Motor (56) verbunden ist; und
Laden der elektrischen Stromquelle (34) mit dem elektrischen Motor (56), während der Drehmomentausgleichsrotor (18') gebremst wird.

## Revendications

1. Aéronef à voilure tournante (10), comprenant :
un système de propulsion (22) incluant un moteur (26) et un arbre d'entraînement (32) accouplé au moteur (26), l'arbre d'entraînement (32) incluant un accouplement coulissant (36) séparant l'arbre d'entraînement (32) en un arbre d'entrée (38) et un arbre de sortie (40), l'accouplement coulissant (36) pouvant fonctionner entre une position en prise accouplant de manière rotative l'arbre d'entrée (38) et l'arbre de sortie (40) et une position désolidarisée désolidarisant de manière rotative l'arbre de sortie (40) de l'arbre d'entrée (38) ;
un rotor principal (18) accouplé au moteur (26) ;
un rotor anticouple (18') attaché à l'arbre de sortie (40) ; et
un moteur électrique (56) accouplé à l'arbre de sortie (40) par une courroie (58), la courroie étant reliée au moteur électrique (56) par l'intermédiaire d'un embrayage centrifuge.

2. Aéronef à voilure tournante selon la revendication 1, dans lequel le moteur électrique (56) est accouplé à un générateur entraîné par le moteur (26) ou est accouplé à une batterie (34).

3. Procédé, comprenant :
un fonctionnement d'un aéronef à voilure tournante (10) selon la revendication 1 ;
un actionnement de l'accouplement coulissant (36) jusqu'à la position désolidarisée désolidarisant le rotor anticouple (18') du moteur (26) ;
une accélération du rotor principal (18) avec le moteur (26) tandis que le rotor anticouple (18') est désolidarisé du moteur (26) ;
un entraînement, lorsque l'accouplement coulissant (36) est dans la position désolidarisée, de l'arbre de sortie (40) avec un moteur électrique (56) à une vitesse synchrone avec l'arbre d'entrée (38) entraîné par le moteur (26) ; et
un actionnement de l'accouplement coulissant (36) jusqu'à la position en prise lorsque la vitesse d'arbre d'entrée (38) et la vitesse d'arbre de sortie (40) sont synchrones.

4. Procédé selon la revendication 3, comprenant en outre un entraînement du rotor principal (18) et du rotor anticouple (18') avec le moteur (26) à une vitesse de vol.

5. Procédé selon la revendication 4, comprenant en outre une désolidarisation du moteur électrique (56) de l'arbre de sortie (40) via l'embrayage centrifuge lorsque le moteur (26) entraîne le rotor principal (18) et le rotor anticouple (18') à la vitesse de vol.

6. Procédé selon la revendication 3, comprenant en outre un entraînement du rotor principal (18) et du rotor anticouple (18') avec le moteur (26) tandis que l'accouplement coulissant (36) est dans la position en prise ;
un actionnement de l'accouplement coulissant (36) jusqu'à la position désolidarisée tandis que le moteur (26) entraîne le rotor principal (18) et l'arbre d'entrée (38) ; et
un freinage d'une rotation du rotor anticouple (18') avec le moteur électrique (56) accouplé à l'arbre de sortie (40).

7. Procédé selon la revendication 6, comprenant en outre une source d'énergie électrique (34) reliée au moteur électrique (56) ; et
une charge de la source d'énergie électrique (34) avec le moteur électrique (56) pendant un freinage du rotor anticouple (18').
